# EUROPEAN PATENT APPLICATION

(11) **EP 0 625 662 A1**
(43) Date of publication of application: **23.11.1994**
(21) Application number: 94303445.4
(22) Date of filing: 13.05.1994
(51) Int. Cl.: F16L 3/10

(54) **Multi-point tube clamp**

(30) Priority: 19.05.1993 US 64728; 25.06.1993 US 83847
(71) Applicant: GENERAL ELECTRIC COMPANY, Schenectady, NY 12345 (US)
(72) Inventor: Umney, Michael Anthony, Mason, Ohio 45040 (US); Doyle, Vincent Lynn, West Chester, Ohio 45069 (US); Macer, William Aelred, Wilmington, Ohio 45177 (US); Zearbaugh, Scott Richard, Milford, Ohio 45150 (US)
(74) Representative: Pratt, Richard Wilson

(57) **Abstract**

A clamp for mounting a tube to a support plate in a gas turbine engine includes a base plate and a capture plate for capturing the tube therebetween, with a fastener positionable through the base and capture plates for clamping them together and mounting the tube to the support plate. The base plate includes a first recess therein for receiving the tube, which recess includes three adjoining sides sized and configured for contacting the tube at two points.

## Description

The present invention relates generally to gas turbine engines, and, more specifically, to a clamp for securing tubes within the engine against movement, including vibratory movement, therein.

### BACKGROUND OF THE INVENTION

A gas turbine engine such as that used for powering an aircraft in flight, for example, includes numerous tubes for channeling various fluids through the engine during operation. Conventional clamps are used for mounting the tubes to the engine casing, at standoff brackets for example, to accurately position the tubes and prevent their movement during operation of the engine.

Since the gas turbine engine includes various rotating components, the tubes are subject to vibratory excitation which must be controlled for preventing vibratory fatigue damage thereto. One exemplary conventional tube clamp used in an aircraft gas turbine engine has two clamp halves pivoted together at respective first ends thereof so that the clamp halves may be opened for inserting one or more tubes therebetween, and then pivoted together to capture the tubes. Each clamp half typically includes a generally semicircular recess which collectively surround a respective tube, and a fastener hole extends through the tube clamp halves so that a suitable fastener, such as a bolt, may be inserted through the holes, with a complementary nut joined to the bolt for clamping together the two clamp halves around the one or more tubes therein. The fastener typically also extends through an engine mounted bracket for joining the tube clamp and the tubes therein to the engine casing.

Conventional tube clamps are typically made of suitable metals such as aluminum stainless steel, or Inconel which are selected for use in the engine depending upon the temperature of the individual location from relatively cool near the fan of the engine to relatively hot near the combustor and turbines thereof. Since metal tube clamps are known to abrade or chafe the tubes contained therein due to vibratory excitation of the tubes during engine operation, a conventional wear sleeve, made of epoxy for example, is positioned between the tube and the tube clamp to prevent undesirable-wear of the tube during operation.

These conventional tube clamps including wear sleeves are relatively complex in structure, manufacture, and assembly thereof, and collectively add substantially to the weight of the engine. The wear sleeve is an additional part and must be suitably secured to the tube to prevent its liberation therefrom during operation of the engine which is undesirable. Furthermore, metal is known to be a poor vibration damper, and therefore the metal tube clamps provide little vibratory damping of the tubes contained therein being subject to vibratory excitation during operation of the engine.

The two opposing recesses in the clamp halves are predeterminedly sized to provide a predetermined amount of clamping force on the tube when the clamp halves are bolted together. Since the radius or outer diameter of the tube and the radii of the complementary recesses are subject to conventional manufacturing tolerances during manufacture, the radii of the recesses are typically made larger than the radius of the tube in this gas turbine engine environment to prevent an oversized tube relative to the recesses which would pinch the perimeter of the tube at the two opposite ends of the semi-circular recess which could damage or decrease the useful life of the tube due to stress concentrations thereat. However, by making the complementary recesses oversized relative to the tube outer diameter, the tube is only supported at two opposite points or lines of contact 180° apart which localizes the clamping force and reduces the amount of friction damping of the tube in the clamp. Conventional tubular wearsleeves are typically utilized around the tubes in the recesses to prevent excessive tube wear at the two clamping points. And, vibratory motion transverse or perpendicular to the diameter line joining the two contact points is damped solely by friction damping at these two points.

### Summary of the Invention

A clamp for mounting a tube to a support plate in a gas turbine engine includes a base plate and a capture plate for capturing the tube therebetween, with a fastener positionable through the base and capture plates for clamping them together and mounting the tube to the support plate. The base plate includes a first recess therein for receiving the tube, which recess includes three adjoining sides sized and configured for contacting the tube at two points.

### Brief Description of the Drawings

The invention, in accordance with preferred and exemplary embodiments, together with further objects and advantages thereof, is more particularly described in the following detailed description taken in conjunction with the accompanying drawings in which:

Figure 1 is a schematic representation of an exemplary aircraft gas turbine engine having a clamp in accordance with a first embodiment of the present invention for mounting a tube therein.

Figure 2 is a top view of the clamp illustrated in Figure 1 taken along line 2-2.

Figure 3 is an enlarged partially sectional view of a portion of the tube clamp illustrated in Figure 1 surrounding the tube.

Figure 4 is an elevation view of a second embodiment of the tube clamp in accordance with the present invention shown assembled together for clamping the tube in place.

Figure 5 is an elevation, partly sectional view of the tube clamp illustrated in Figure 4 shown with the capture plate rotated for allowing the tube to be inserted into or withdrawn from the base plate recess thereof.

Figure 6 is a top view of the tube clamp illustrated in Figure 5 taken along line 6-6 showing the open rotated position of the capture plate relative to the base plate for assembly or disassembly of the tube within the tube clamp.

Figure 7 is an elevation, partly sectional view of a third embodiment of a clamp for securing a pair of tubes in accordance with the present invention shown in an assembled position.

Figure 8 is an elevation view of a fourth embodiment of a clamp for securing three tubes in accordance with the present invention.

### DESCRIPTION OF THE PREFERRED EMBODIMENT(S)

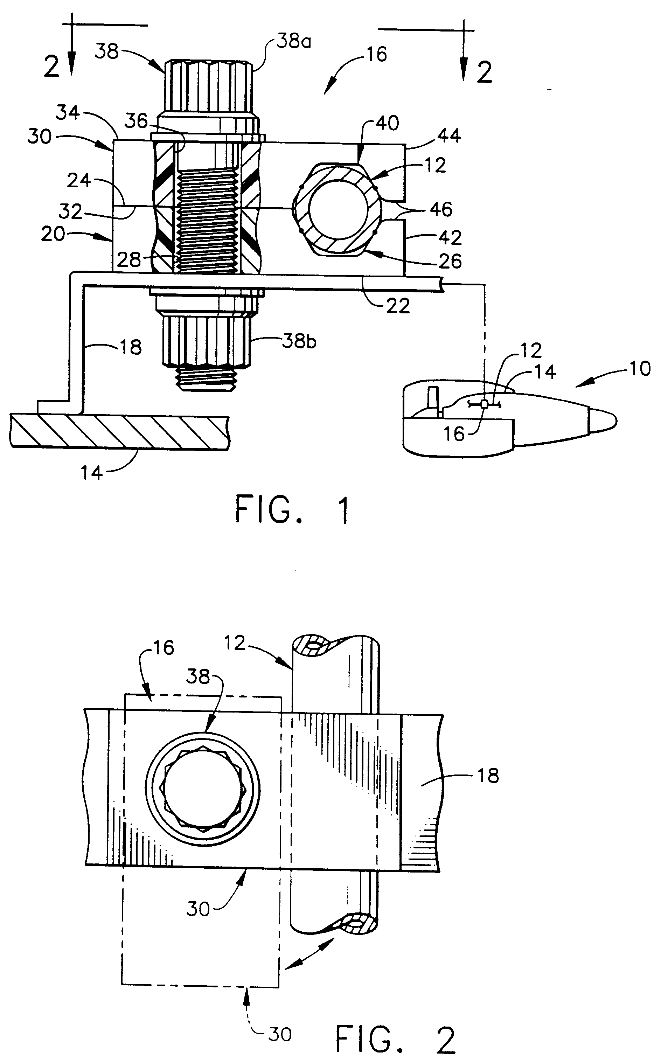

Illustrated schematically in Figure 1 is an exemplary aircraft, turbofan, gas turbine engine 10 having an exemplary tube 12 therein which is mounted to an outer casing 14 thereof by a tube clamp 16 in accordance with one embodiment of the present invention. In this exemplary embodiment, a conventional support plate 18, or bracket, which may take any suitable form, is conventionally secured to the outer casing 14 for providing a standoff therefrom for the tube 12 mounted thereto by the clamp 16.

The tube clamp 16 includes a base plate 20. or lower clamp half, having a flat lower surface 22 disposed on the support plate 18; a flat upper surface 24 having a generally semi-circular, first recess 26 therein for receiving the tube 12; and a first hole 28 spaced laterally from the first recess 26 and extending through the base plate 20 from the lower to upper surfaces 22 and 24 thereof. A capture plate 30, or upper clamp half, is positioned above the base plate 20 and includes a lower surface 32 facing the base plate upper surface 24; an upper surface 34; and a second hole 36 extending through the capture plate 30 from the lower to upper surfaces 32 and 34 thereof.

The base plate 20 and the capture plate 30 are joinable together for coaxially aligning together the first and second holes 28, 36 to provide a common aperture through which is positionable a fastener 38 which extends also into the support plate 18 for clamping the capture plate 30 to the base plate 20, with the capture plate lower surface 32 being effective for clamping the tube 12 against the first recess 26. In the exemplary embodiment illustrated in Figure 1, the fastener 38 includes a conventional bolt 38a which extends through the first and second holes 28, 36 and through the support plate 18, and a conventional nut 38b threadingly engages the bolt 38a so that the bolt 38a may be torqued for clamping together the base and capture plates 20, 30 around the tube 12. Figure 1 illustrates the tube clamp 16 in its assembled and clamped position around the tube 12 for supporting the tube 12 to the support plate 18.

Figure 2 is a top view of the tube clamp 16 illustrated in Figure 1 showing in solid line the tube clamp 16 assembled and clamped to the tube 12 in a closed position, and in phantom line in an open position for allowing assembly thereto and disassembly therefrom of the tube 12. More specifically, the capture plate 30 is pivotable about the fastener 38 when the fastener 38 is unloaded, which occurs by removing torque from the bolt 38a by partially unscrewing it relative to the nut 38b. This allows the capture plate 30 to be displaced or rotated clockwise as shown in Figure 2 to displace the capture plate lower surface 32 (see Figure 1) away from the base plate first recess 26 for allowing the tube 12 to be inserted into and withdrawn from the first recess 26 perpendicularly thereto without obstruction by the capture plate 30, while the capture plate 30 is still joined to the base plate 20 by the loosened fastener 38. The base plate first hole 28 is disposed Perpendicularly to the base plate upper surface 24 as illustrated in Figure 1, and the first recess 26 extends into the base plate upper surface 24 with its longitudinal axis, or center, being disposed parallel to the capture plate upper surface 24 and parallel, for example coaxially with, the centerline axis of the tube 12. In this way, the capture plate 30 may be rotated clockwise as shown in Figure 2 to open the tube clamp 16 and allow full access to the first recess 26 so that the tube 12 may be inserted therein or removed therefrom. The capture plate 30 may then be rotated counterclockwise as shown in Figure 2 from its phantom to its solid position over the tube 1 2 disposed in the first recess 26 to capture the tube 12 therein. The fastener 38 may then be suitably torqued to clamp together the base and capture plates 20 and 30 for securing the tube 12 to the support plate 18.

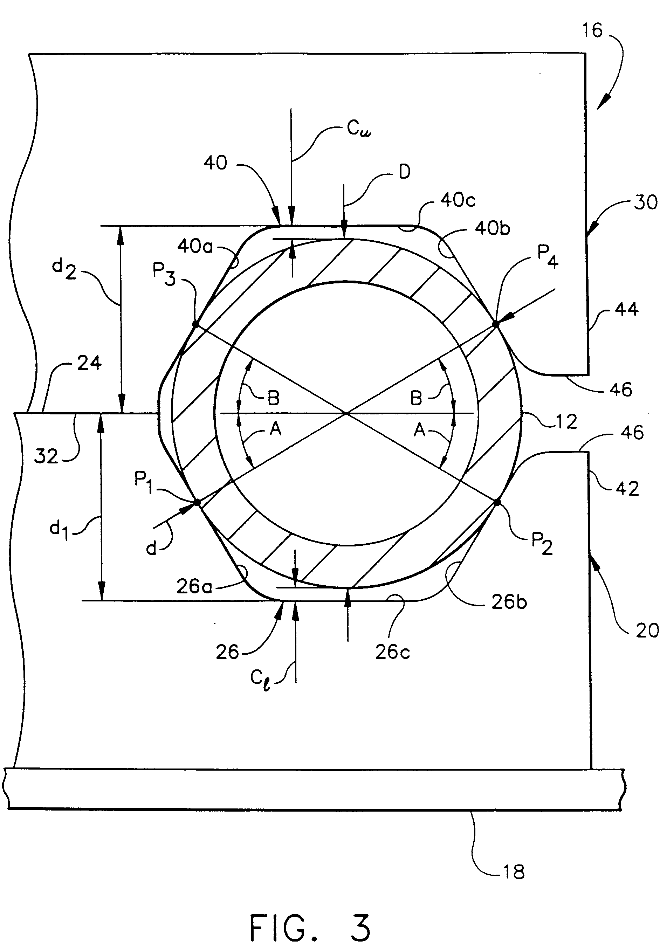

As shown in more particularity in Figure 3, the first recess 26 includes at least three adjoining sides defined by a first side or left seat 26a; a second side or right seat 26b; and a third side or middle seat 26c disposed between and below the left and right seats 26a, 26b. The left and right seats 26a, 26b are sized and configured to contact the tube 12 at respective two points or lines of contact designated P₁ and P₂. Since Figure 3 is a side view of the tube clamp 16, the two points of contact P₁ and P₂ are shown as points, the locus of which form respective lines along the outer surface of the tube 12 parallel to its centerline axis. The middle seat 26c is preferably sized and configured to provide a lower clearance Cₗ with the perimeter of the tube 12 by being spaced below or radially outwardly away from the tube 12 without contact therewith when the capture plate 30 is clamped against the base plate 20.

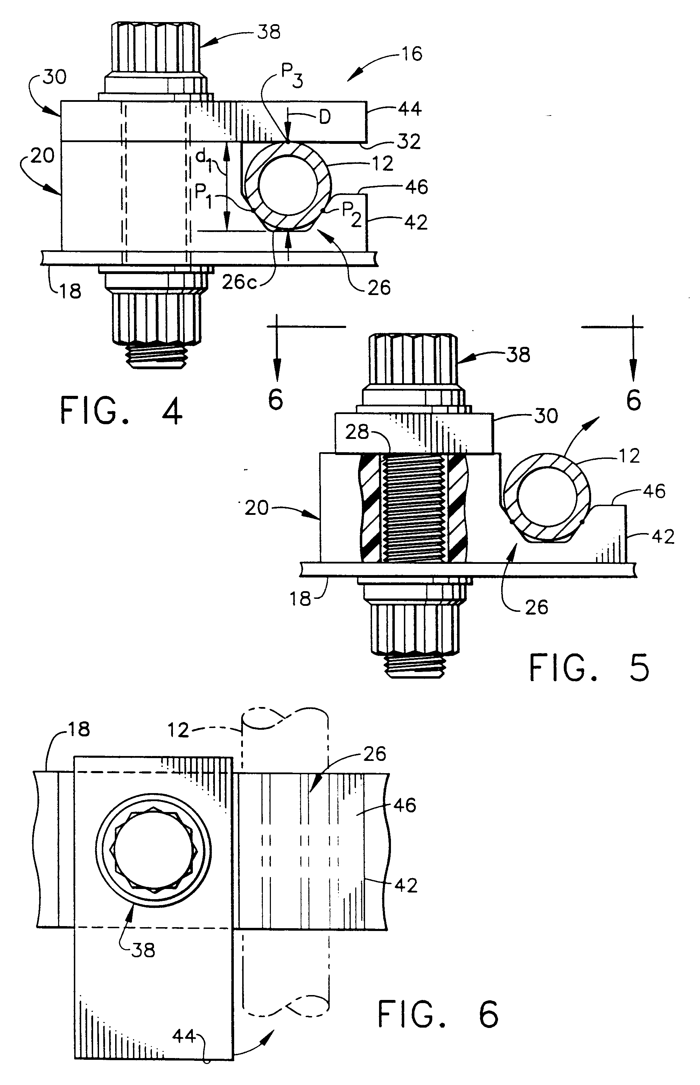

The tube 12 has an outer diameter D, and the left and right seats 26a, 26b define with the capture plate lower surface 32 a circle having a diameter designated d contacting the tube 12 at at least three points (see Figure 4), with four points being shown in Figure 3, which include the first and second points P₁ and P₂. The diameter d of the circle of the points of contact initially has a value less than the tube outer diameter D which is preselected for providing a predetermined compressive load on the tube 12 when the fastener 38 clamps together the base and capture plates 20, 30. In this way, the tube 12 is clamped by the capture and base plates 30, 20 at at least three points which is at least one point greater than the two-point contact arrangement of the prior art wherein the first recess 26 is semi-circular with a radius slightly larger than the radius of the tube 12.

Referring again to Figure 3, the left and right seats 26a, 26b are preferably inclined symmetrically relative to the middle seat 26c, and the left, right, and middle seats 26a, 26b, and 26c are preferably substantially straight and join together at suitable arcuate transitions for reducing stress concentration thereat. The middle seat 26c is preferably disposed parallel to the base plate upper surface 24 and perpendicularly to the centerline of the tube 12. In this way, the two points of contact P₁ and P₂ are disposed symmetrically about a vertical or radial axis through the centerline of the tube 12 with substantially equal angles of inclination A measured from the horizontal plane through the tube centerline. The angles A are preferably in the range of about 30° to about 45° so that the contact forces between the respective left and right seats 26a, 26b against the tube 12 are each resolved with two components in the vertical and horizontal planes for increasing as well as controlling the effective clamping of the tube 12 and the associated friction damping thereof. In a conventional tube clamp, only a single point of contact would be provided at the bottom of the tube 12 with lateral or horizontal vibratory motion thereof being restrained solely by limited friction damping therebetween. By providing the two points of contact P₁ and P₂ in the base plate 20, the friction damping may be provided at two locations for increasing the total amount thereof as well as more fully restraining vibratory movement of the tube 12 both in the horizontal and vertical directions, as well as along its longitudinal axis. The lower clearance Cₗ is required in accordance with the present invention to ensure that the lower half of the tube 12 does not contact the first recess 26 at three points of contact, since, of course, three points of contact define a circle which would then lead to the same problem presented above in the Background section, i.e., variations of the radius of such circle and that of the tube 12 due to manufacturing stack-up tolerances. The capture plate 30 may have a similar configuration to that of the base plate 20 or not.

In the embodiment illustrated in Figure 3, the first recess 26 has a first depth d₁ measured relative to the flat base plate upper surface 24 adjacent the first hole 28 and to the middle seat 26c which is preferably less than the tube outer diameter D and which is preselected for providing a predetermined compressive load on the tube 12 when the fastener 38 clamps together the base and capture plates 20, 30.

More specifically, and for the embodiment illustrated in Figure 3, the capture plate lower surface 32 similarly includes a generally semi-circular, second recess 40 which is spaced laterally from the second hole 36 (see Figure 1) for aligning the second recess 40 with the first recess 26 for receiving the tube 12 therebetween. The second recess 40 similarly includes at least three adjoining sides defined by a fourth side or left cover 40a, a fifth side or right cover 40b. and a sixth side or middle cover 40c disposed between the left and right covers 40a, 40b. The left and right covers 40a, 40b are sized and configured to contact the tube 12 at respective two points or lines of contact P₃ and P₄ similarly to the first and second points of contact P₁ and P₂. The middle cover 40c is preferably spaced above and radially outwardly away from the tube 12 without contact therewith when the capture plate 30 is clamped to the base plate 20. In this way an upper clearance Cᵤ is provided between the middle cover 40c and the top of the tube 12 for the same reasons provided for the lower clearance Cₗ between the middle seat 26c and the bottom of the tube 12.

The second recess 40 is substantially identical to the first recess 26, but a mirror image thereof, with the left and right covers 40a, 40b also being inclined symmetrically relative to the middle cover 40c. The left, right, and middle covers 40a, 40b, 40c are also preferably substantially straight and join each other at suitable transitions for reducing stress concentrations thereat, with the middle cover 40c being disposed parallel to the capture plate lower surface 24 and the middle seat 26c, and perpendicularly to the centerline of the tube 12. In this way, the left and right covers 40a, 40b effect a third and fourth points of contact P₃, P₄ being symmetrical relative to the vertical plane through the tube centerline, with angles of inclination B measured relative to the horizontal plane through the tube centerline being preferably within the range of about 30° to about 45° for the same reasons provided for the inclination angles A. In the preferred embodiment illustrated in Figure 3, all four points of contact P₁, P₂, P₃, and P₄ collectively define a single circle having the diameter d which is preferably coaxial with the centerline of the tube 12 to provide four circumferentially spaced apart points of contact around the circumference of the tube 12 with respective clamping forces being resolved into both vertical and horizontal components for providing increased vertical and horizontal restraint of the tube 12 between the capture plate 30 and the base plate 20 and increased friction damping therefrom. The second recess 40 has a second depth d₂ measured relative to the flat capture plate lower surface 32 adjacent the second hole 36 and to the middle cover 40c which is also less than the tube outer diameter D. The first and second depths d₁ and d₂ are selected for providing a predetermined compressive load on the tube 12 when the fastener 28 clamps together the base and capture plates 20, 30.

As shown in Figure 1, the base plate upper surface 24 and the capture plate lower surface 32 are flat where they abut each other at the first and second holes 28, 36 at which location the base and capture plates 20, 30 are clamped together in compression when the fastener 38 is tightened. The aligned first and second recesses 26, 40 collectively define a polygonal aperture which contacts the tube 12 at three or more (four being shown) points of contact for preventing its lateral movement when clamped therebetween. The diameter d is preferably slightly less than the tube outer diameter D as desired prior to clamping so that an interference fit is created between the tube 12 and the first and second recesses 26 and 40 when the fastener 38 is tightened, at which time the diameter d will be expanded to match the tube diameter D. This interference fit will suitably compress the tube 12 to provide effective clamping thereof which will prevent its movement during operation, and increase friction damping.

In order to ensure effective clamping of the tube 12 between the first and second recesses 26 and 40, the base and capture plates 20, 30 each have respective distal ends 42, 44 on the opposite sides of the respective first and second recesses 26, 40 relative to the first and second holes 28, 36. The distal ends 42, 44 have respective reliefs 46, or reduced thickness relative to the thicknesses of the base and capture plates 20, 30 adjacent the first and second holes 28, 36 to ensure that when the base and capture plates 20, 30 are clamped together by the fastener 38, the distal ends 42, 44 thereof are not clamped together to prevent interference with the clamping ability of the first and second recesses 26, 40 on the tube 12.

The tube clamp 16 described above compared to a conventional hinged tube clamp is accordingly simpler in structure and allows insertion or removal of the tube 12 by simply loosening the fastener 38 and rotating the capture plate 30. In the conventional hinged tube clamp, its fastener must be completely removed before the two hinged clamp-halves may be pivoted apart to insert or remove a tube therein. Although the tube clamp 16 may be formed of conventional metals such as aluminum, stainless steel, or Inconel, in the preferred embodiment illustrated in Figure 1, both the base and capture plates 20, 30 are preferably formed of a composite, preferably non-metal, material, and the tube clamp 16 is characterized by the absence of a discrete wear sleeve surrounding the tube 12 in the first and second recesses 26 and 40 as would be required in a conventional tube clamp. A composite tube clamp 16 will, therefore, have significant weight savings over a metal embodiment thereof and will also have inherent damping capability significantly greater than that that may be obtained from metal tube clamps. This damping will reduce the vibratory energy in the tube 12 and will increase the useful life of the tube 12.

A composite tube clamp 16 may be formed of conventional polymeric resins as are commercially available. For example, clamps 16 used in the cooler regions of the engine, near the fan for example, may be made from low temperature resins like epoxy or bismaleimide (BMI). In hotter regions of the engine, polymide resin composites, for example PMR15, may be used due to their greater temperature capability. Furthermore, structural fibers may be used in a matrix for providing selective strength of the tube clamp 16. For example, conventional fibers, such as fiberglass or carbon fibers or polymeric fibers, may be used in a suitable resin matrix such as those disclosed above. The fibers may be oriented at random or may be aligned as required for obtaining suitable strength of the base and capture plates 20, 30.

The resin forming the tube clamp 16 may be selected to provide self lubrication between the tube clamp 16 and the tube 12 as the tube clamp 16 itself abrades at the first and second recesses 26, 40 which further allows the conventional wear sleeve to be eliminated. For example, the fibers or resin can abrade during operation for releasing dust or powder which act as a dry lubricant between the tube 12 and the tube clamp 16. Although the conventional wear sleeve is preferably omitted to reduce the number of parts, and manufacturing and assembly requirements to reduce cost, they may be used if desired. Or, conventional wear coatings may be applied to the recesses 26, 40 to reduce tube wear.

Accordingly, the tube clamp 16 may be specifically designed for the different temperature environments of the engine 10 from relatively cool to relatively hot regions thereof. The tube clamp 16 may be suitably distinguished for the respective temperature regions by using suitable color coding thereof or characteristic shapes thereof to distinguish them. The temperature capability of the tube clamp 16 may be increased by using conventional material additives thereto or coatings thereon for use in higher temperature regions.

Illustrated in Figures 4-6 is a second embodiment of the tube clamp 16 which is substantially identical to the embodiment illustrated in Figures 1-3, except, however, that the capture plate lower surface 32 is completely flat without the second recess 40 therein, and the first recess 26 is sized for receiving the entire tube outer diameter D. Since the lower surface 32 is flat, a single point or line of contact P3 is provided thereon for clamping the tube 12 into the first recess 26 for a total of three circumferentially spaced apart points of contact thereon. Three points of contact compared with the two points of contact in a conventional tube clamp again allows tailoring of restraining and friction forces in the horizontal and vertical directions for better securing the tube 12 against vibratory excitation forces. The first depth d₁ is slightly greater than the tube outer diameter D to provide the lower clearance with the middle seat 26c, with the capture plate 30 providing an interference fit therewith for retaining the tube 12 in the first recess 26. The points of contact P₁ and P₂ are preselected to provide a predetermined interference fit when the capture plate 30 is clamped against the base plate 20 and the top of the tube 12 for providing a predetermined compressive load thereon.

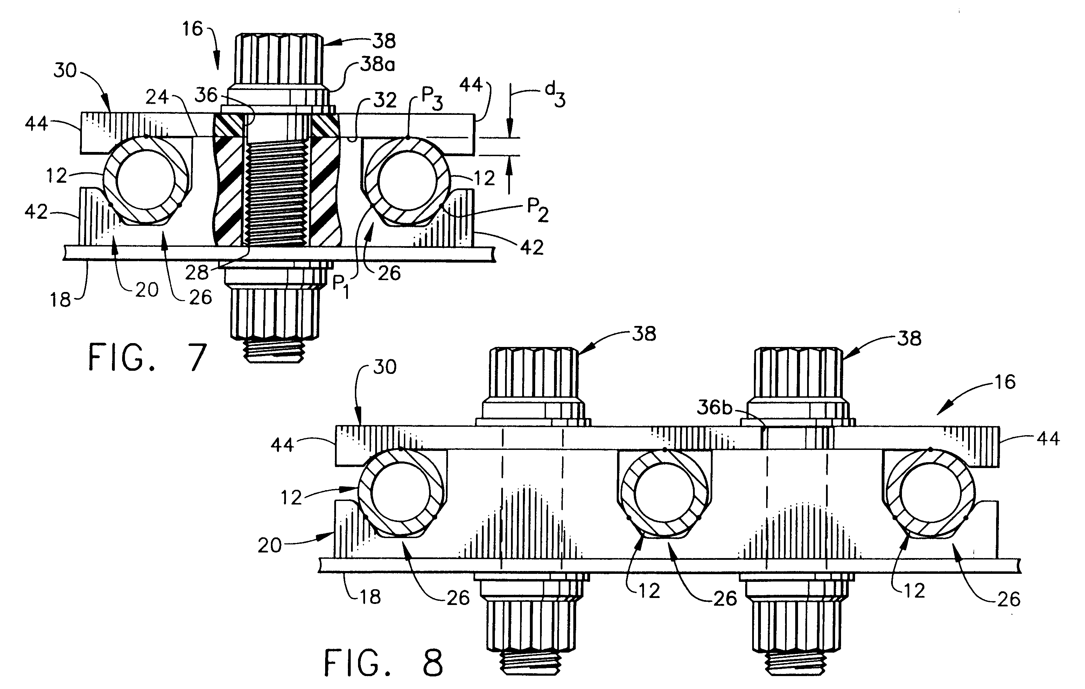

In this embodiment, the entire lower surface 32 of the capture plate 30, including at the distal end 44 thereof, is completely flat to also allow the capture plate 30 to be rotated when the clamping torque on the fastener 38 is just removed without further unthreading of the fastener 38. The capture plate 30 is shown in Figure 4 in its clamping position against the tube 12, and may be rotated clockwise as illustrated in Figures 5 and 6 when torque is sufficiently removed from the fastener 38 to allow access of the first recess 26 which is uncovered thereby. In this way, the tube 12 may be inserted into the recess 26 or withdrawn therefrom as required. Although the tube 12 may be similarly inserted into or withdrawn from the first recess 26 in the first embodiment illustrated in Figures 1-3, the second recess 40 contained in the capture plate 30 in that embodiment requires that the fastener 38 be unscrewed sufficiently more than in the second embodiment illustrated in Figures 4-6 to allow the tube 12 to be removed or inserted laterally from the first and second recesses 26, 40 without obstruction thereby.

Illustrated in Figure 7 is a third embodiment of the tube clamp 16 which is identical to the second embodiment illustrated in Figures 4-6 except that it is symmetrically configured for identically clamping two tubes 12, and the distal ends 44 of the capture plate 30 are in the form of lips extending toward the base plate upper surface 24. Each lip 44 is positionable adjacent to a respective tube 12 on an opposite side thereof relative to the capture plate second hole 36 and the fastener 38 positionable therethrough. The lip 44 is spaced laterally or horizontally from the tube 12 to provide a clearance therewith and to ensure the formation of a single third point of contact P₃ between the capture plate 30 and the top of the tube 12. The lip 44 has a lip depth d₃ relative to the flat capture plate lower surface 32 at the second hole 36 which is less than the tube outer diameter D for preventing rotation of the capture plate 30 about the fastener 38 when the capture plate 30 abuts the base plate 20. During assembly of the tube clamp 16, the capture plate 30 is positioned over the two tubes 12 and against the base plate 20. As the fastener 38 is tightened, the lips 44 prevent the capture plate 30 from rotating due to friction between it and the head of the bolt 38a when the lip 44 contacts the tube 12 and would have to move upwardly relative thereto in order to allow the capture plate 30 to rotate, which upward movement is prevented by the abutting contact between the capture plate 30 and the base plate 20 at the first and second holes 28, 36.

Although the tube clamp 16 illustrated in Figure 7 could be configured for clamping a single one of the tubes 12, in this exemplary embodiment the base plate 20 includes a pair of the first recesses 26 disposed on opposite sides of the base plate first hole 28 for receiving a pair of the tubes 12, respectively. The capture plate 30 correspondingly includes a pair of the lips 44 on opposite sides of the capture plate second hole 36, with the single capture plate 30 being effective for clamping the pair of tubes 12 to the base plate 20 upon loading of the fastener 38.

The third embodiment of the tube clamp 16 illustrated in Figure 7 is assembled and disassembled just as the first two embodiments illustrated in Figures 1-6 with the fastener 38 being partially unscrewed to allow the capture plate 30 to be rotated either clockwise or counterclockwise relative to the base plate 20 for uncovering both tubes 12 to allow for their removal and replacement as desired.

The second and third embodiments of the tube clamp 16 illustrated in Figures 4-7 may also be formed of suitable metal, but, in the preferred embodiment, the base and capture plates 20, 30 are similarly formed of composite materials such as described above with respect to the first embodiment illustrated in Figures 1 and 2. The second and third embodiments are similarly characterized by the absence of a conventional wear sleeves surrounding the tubes 12 in the respective first recesses 26 thereof.

Any of the three embodiments illustrated in Figures 1-7 may be configured for clamping at least one tube 12 therein, or two tubes 12 therein as illustrated for example in Figure 7. And, as illustrated in Figure 8, the tube clamp 16 may be configured for clamping three or more tubes 12 therein. The three-tube clamp 16 illustrated in Figure 8 is substantially identical to the two-tube clamp illustrated in Figure 7 except that the base plate 20 is configured to have three respective recesses 26 therein and a second one of the fasteners 38 is provided, with each fastener 38 being disposed between adjacent ones of the tubes 12. The capture plate 30 similarly has a pair of opposing distal ends 44 in the form of lips which function as described with respect to the third embodiment illustrated in Figure 7. In this embodiment, however, one of the second holes 36 in the capture plate 30 is in the form of a U-shaped slot 36b for allowing the unclamped capture plate 30 to rotate about one of the fasteners 38, e.g. the left fastener 38, with the slot 36b clearing the other fastener 38 to provide unobstructed access to each of the first recesses 26 for assembling and disassembling the tubes 12 therefrom. Both fasteners 38 may, therefore, remain joined through the plates 20, 30 and need only be loosened for rotating the capture plate 30.

While there have been described herein what are considered to be preferred embodiments of the present invention, other modifications of the invention shall be apparent to those skilled in the art from the teachings herein, and it is, therefore, desired to be secured in the appended claims all such modifications as fall within the true spirit and scope of the invention.

## Claims

1. A clamp for mounting a tube to a support plate in a gas turbine engine comprising:
a base plate including a lower surface disposable on said support plate, a flat upper surface having a first recess therein for receiving said tube, and a first hole spaced from said first recess and extending through said base plate from said lower to upper surfaces thereof;
a capture plate including a lower surface facing said base plate upper surface, an upper surface, and a second hole extending through said capture plate from said lower to upper surfaces thereof;
said base plate and said capture plate being joinable together for aligning together said first and second holes;
a fastener positionable through said first and second holes into said support plate for clamping said capture plate to said base plate, with said capture plate lower surface being effective for clamping said tube against said first recess; and
said first recess including at least three adjoining sides defined by a left seat, a right seat, and a middle seat disposed between said left and right seats, said left and right seats being sized and configured to contact said tube at two points, and said middle seat being spaced away from said tube without contact therewith.

2. A clamp according to claim 1 wherein:
said tube has an outer diameter; and
said left and right seats define with said capture plate lower surface a circle having a diameter less than said tube outer diameter preselected for providing a predetermined compressive load on said tube when said fastener clamps together said base and capture plates.

3. A clamp according to claim 2 wherein said left and right seats are inclined symmetrically relative to said middle seat.

4. A clamp according to claim 3 wherein said left, right, and middle seats are substantially straight, with said middle seat being disposed parallel to said base plate upper surface.

5. A clamp according to claim 2 wherein said capture plate lower surface has a second recess therein spaced from said second hole for receiving said tube, said second recess including at least three adjoining sided defined by a left cover, a right cover, and a middle cover disposed between said left and right covers, said left and right covers being sized and configured to contact said tube at two points, and said middle cover being spaced away from said tube without contact therewith.

6. A clamp according to claim 5 wherein said left, right, and middle covers are substantially straight, with said left and right covers being inclined symmetrically relative to said middle cover, and said middle cover being disposed parallel to said capture plate lower surface and said middle seat.

7. A clamp according to claim 2 wherein said first recess is sized for receiving said entire tube outer diameter.

8. A clamp according to claim 7 wherein said capture plate includes a distal end positionable adjacent to said tube, and said capture plate lower surface, including said capture plate lower surface at said capture plate distal end, is completely flat.

9. A clamp according to claim 7 wherein said capture plate includes a distal end in the form of a lip extending toward said base plate upper surface and positionable adjacent to said tube on an opposite side thereof relative to said capture plate second hole and said fastener positionable therethrough, said lip having a lip depth less than said tube outer diameter for preventing rotation of said capture plate about said fastener when said capture plate abuts said base plate.

10. A clamp according to claim 9 wherein;
said base plate includes a pair of said first recesses disposed on opposite sides of said base plate first hole for receiving a pair of said tubes, respectively;
said capture plate includes a pair of said lips on opposite sides of said capture plate second hole; and
said capture plate is effective for clamping said pair of tubes to said base plate upon loading of said fastener.
